# EUROPEAN PATENT SPECIFICATION

(11) **EP 1 967 380 B1**
(45) Date of publication and mention of the grant of the patent: **12.02.2014**
(21) Application number: 06834252.6
(22) Date of filing: 01.12.2006
(51) Int. Cl.: B41M 5/26, C04B 41/83, C04B 41/00, C04B 41/49, C09D 5/00

(54) **MARKING COMPOSITION AND INFORMATION DISPLAY METHOD**
MARKIERUNGSZUSAMMENSETZUNG UND INFORMATIONSANZEIGEVERFAHREN
COMPOSITION DE MARQUAGE ET PROCÉDÉ D'AFFICHAGE D'INFORMATION

(30) Priority: 21.12.2005 JP 2005368533
(43) Date of publication of application: 10.09.2008
(73) Proprietor: NGK Insulators, Ltd., Nagoya-shi, Aichi 467-8530 (JP)
(72) Inventor: TOKUNAGA, Takeshi, NGK INSULATORS, LTD., Nagoya-shi, Aichi 4678530 (JP); HIRAI, Sadaaki, Nagoya-shi, Aichi 4678530 (JP)
(74) Representative: Paget, Hugh Charles Edward
(86) International application number: PCT/JP2006/324497
(87) International publication number: WO 2007/072694

(56) References cited:
- WO-A1-2005/021673
- WO-A1-2005/021673
- JP-A- 4 112 415
- JP-A- 9 286 169
- JP-A- 07 025 154
- JP-A- 62 138 574
- JP-A- 2002 283 729
- US-A- 5 422 383
- ANONYMOUS: "Kronos", Titan Kogyo, Ltd. Product Line Up , 2008, XP002612255, Retrieved from the Internet: URL:http://park10.wakwak.com/~titan/produc t/ka_kr.html [retrieved on 2010-12-01]

## Description

### TECHNICAL FIELD

The present invention relates to a marking composition and an information display method. More particularly, the present invention relates to a marking composition which exhibits excellent concealing properties and heat resistance and produces a high definition marking with high contrast and excellent discrimination capability when applied to the surface of an article, and to an information display method using the marking composition.

### BACKGROUND ART

A method of displaying information by forming a marking on the surface of an article is widely used for displaying a variety of information. For example, Patent Document 1 discloses a method of forming a marking as identification information. This method includes forming a coating layer containing a silicone resin and TiO₂-coated mica on a product or a tag attached to the product, and irradiating predetermined parts of the coating layer with a carbon dioxide (CO₂) laser beam to blacken the irradiated parts.
Patent Document 1: United States Patent No. 5,855,969

WO2005/021673 discloses compositions for heat-resistant labels that are attachable under high temperature conditions of 300°C-1100°C. A sticking layer of the heat-resistant labels includes a hardened coating film including a silicone resin and at least one member selected from the group consisting of a polymetallocarbosilane resin, zinc powder, tin powder and aluminium powder.

JP-A-4-112415 discloses a wire insulation composition. The composition includes a polymetallocarboxylane mixed with silicone resin, inorganic filler powder and inorganic filler fibre.

### DISCLOSURE OF THE INVENTION

However, the invention disclosed in Patent Document 1 pertains to a marking composition containing a pigment with transparency and strong reflection that reduce marking discrimination capability and a resin with a large heating loss. The concealing properties, discrimination capability, and heat resistance of the resulting marking are not necessarily sufficient.

The present invention has been achieved in order solve the above problem and has an object of providing a marking composition which exhibits excellent concealing properties and heat resistance and produces a high definition marking with high contrast and excellent discrimination capability when applied to the surface of an article, and to an information display method using the marking composition.

According to the present invention which achieves the above object, a marking composition according to claim 1 and information display method according to claim 4 are provided.

Preferred features are set out in the dependent claims.

According to the present invention, a marking composition which exhibits excellent concealing properties and heat resistance and produces a high definition marking with high contrast and excellent discrimination capability when applied to the surface of an article, and an information display method using the marking composition can be provided.

### BRIEF DESCRIPTION OF THE DRAWINGS

Fig. 1A is a photograph of the marking obtained in Example 1.
Fig. 1B is a photograph of the marking obtained in Comparative Example 1.
Fig. 1C is a photograph of the marking obtained in Comparative Example 3.
Fig. 2 is a diagrammatic chart showing a heating weight loss curve of a polytitanocarbosilane resin.
Fig. 3 is a photograph of the surface of the polytitanocarbosilane resin heated at 800°C for one hour.
Fig. 4 is a diagrammatic chart showing a heating weight loss curve of a silicone resin.
Fig. 5 is a photograph of the surface of the silicone resin heated at 800°C for one hour.

### BEST MODE FOR CARRYING OUT THE INVENTION

Preferred embodiments of the present invention will be described below.

The present invention provides a marking composition for forming a marking on the surface of an article. The marking composition is as set out in claim 1.

As the inorganic pigment used in one embodiment of the marking composition of the present invention, any inorganic pigment having an average particle diameter of 0.1 to 5 µm can be used without limitations. It is preferable that the inorganic pigment be at least one inorganic pigment selected from the group consisting of titanium oxide, aluminum oxide, zirconium oxide, zinc oxide, white lead, and zinc sulfide. Since such an inorganic pigment has properties inherent to pigment such as opacity and highlight scattering properties when applied on the surface of an article, the resulting marking composition exhibits excellent concealing properties and heat resistance and produces a high definition marking with high contrast excelling in discrimination capability.

The inorganic pigment must have an average particle diameter of 0.1 to 5 µm. A preferable range of the average particle diameter, however, is 0.2 to 3 µm, with a more preferable range being 0.4 to 1 µm. Particles of inorganic pigment such as the titanium oxide mentioned above with an average particle diameter of 0.1 to 5 µm are freely dispersed in a resin or a solvent and scatter an increased amount of light, thereby improving the concealing properties (concealing rate) and ensuring stable reading of marked parts by stable light scattering. When applied particularly to a white pigment, it is possible to increase the particle diameter of the white pigment itself. The composition acquires high concealing properties due to the absence of a pigment with transparency. As a result, a high contrast of the printed parts and coated film forming areas can be ensured, giving rise to easy discrimination and stable reading. In contrast, titanium-coated mica (pearl mica) used in a traditional composition is flaky and easily oriented in a coated film to reflect light in a single direction. The coating thus has low light-scattering and low-concealing properties. In addition, when reading the marked parts using a reflective-type red laser reader, the marking may not be properly read due to the highly reflecting surface.

As a preferable example of the resin used in this embodiment, a heat-resistant titanium-containing ceramic resin can be given. A polytitanocarbosilane resin exhibiting only a small amount of heat loss when heated to 800°C or higher due to mineralization is particularly preferable. Incorporation of such a polytitanocarbosilane resin can increase the heat resistance of the marking composition to as high as 800°C.

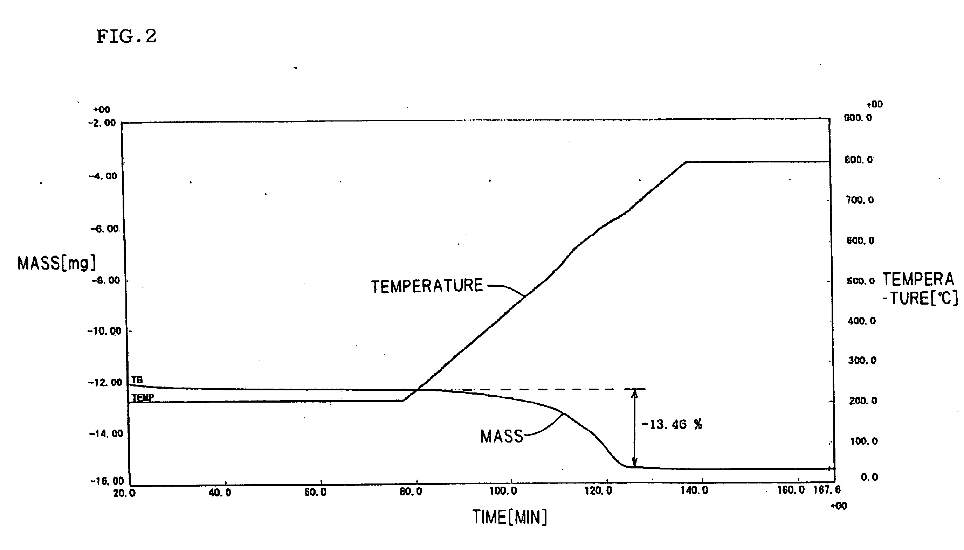

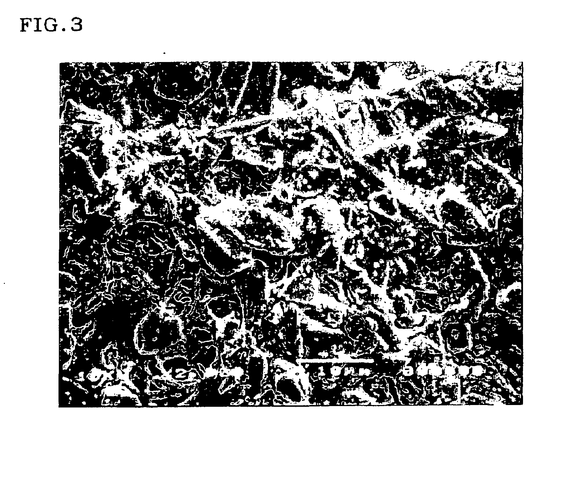

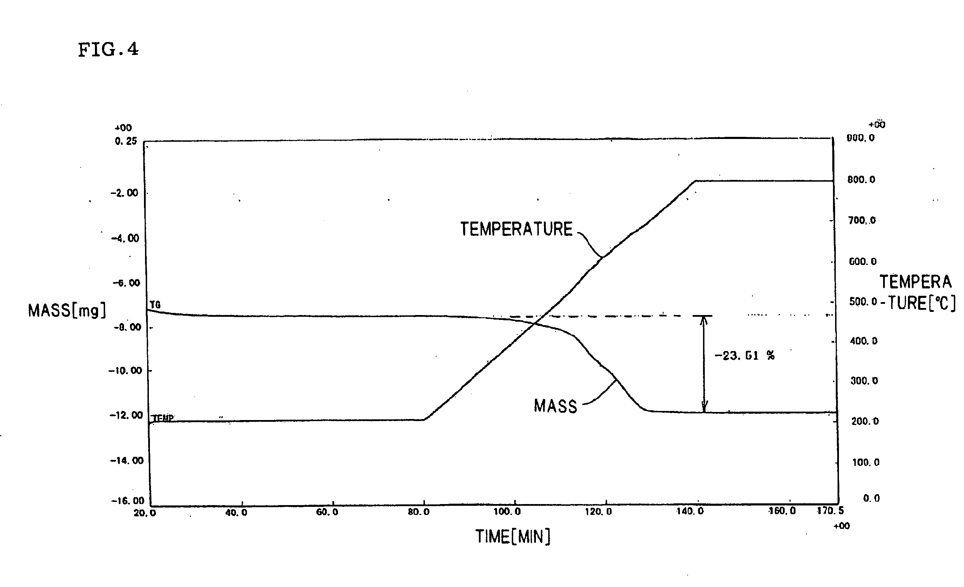

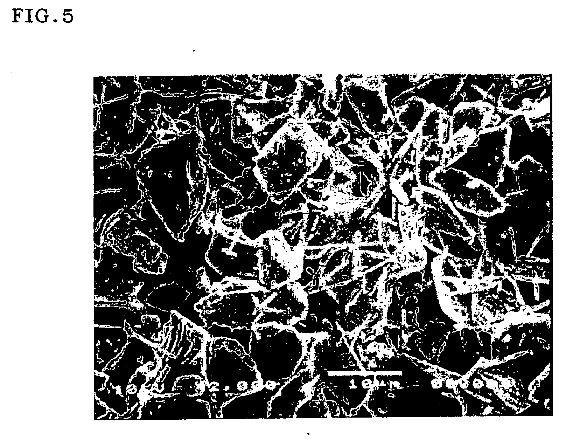

Fig. 2 is a diagrammatic chart showing a heating weight loss curve obtained when the polytitanocarbosilane resin is heat treated and Fig. 3 is a scanning electron microscope photograph of the surface of the polytitanocarbosilane resin taken when heat treated starting from room temperature and further heated from 200 to 800°C at a rate of 60°C/min and maintained at 800°C for one hour. Fig. 4 is a diagrammatic chart showing a heating weight loss curve obtained when a silicone resin is heat treated and Fig. 5 is a scanning electron microscope photograph of the surface of the silicone resin taken when heat treated starting from room temperature and further heated from 200 to 800°C at a rate of 60°C/min and maintained at 800°C for one hour. As can be seen from comparison of Fig. 2 and Fig. 4, the amount of heating weight loss of the polytitanocarbosilane resin (13.4%) is smaller than the amount of heating weight loss of the silicone resin (23.5%). In addition, as can be seen from the comparison of Fig. 3 and Fig. 5, while porosity of the silicone resin is increased, the porosity of the polytitanocarbosilane resin remains low. That is, the silicone resin becomes porous after heat treatment and is liable to be sensitive from outside color change. On the other hand, the polytitanocarbosilane resin hardly becomes porous even after the heat treatment and is more resistant to the outside color change. The polytitanocarbosilane resin is an organosilicon polymer having a network structure in which the main chains are cross-linked by organometallic compounds such as a titanium compound. Once mineralized, the resulting product exhibits only a small heating weight loss when heated to a temperature of 1200°C or higher and can maintain a stable and flexible amorphous ceramic state.

In addition to the inorganic pigment and the titanium-containing ceramic resin, the marking composition of this embodiment contains at least one auxiliary additive selected from the group consisting of mica, talc, kaolin, and silica. By employing such constitution, at the time of marking an auxiliary additive functions as a laser beam sensitizer and amplifies the color change of the marking composition. Among the above-mentioned auxiliary additives, mica can form a strong reflector like pearl mica, but has an effect of preventing occurrence of microcracks unlike pearl mica. For this reason, the microcracks can be reduced to the minimum by the addition of mica. As a result, the difference from refractive index of a resin is reduced as compared with pearl mica, which makes it easy to read markings using a reflective-type reader.

In this embodiment, the content of the inorganic pigment, the titanium-containing ceramic resin, and the auxiliary additive in the marking composition is preferably 30 to 40 mass%, 20 to 30 mass%, and 5 to 15 mass%, and more preferably 32 to 38 mass%, 22 to 28 mass%, and 7 to 13 mass%, respectively. If the content of the inorganic pigment is less than 30 mass%, the concealing properties may decrease; if more than 40 mass%, peel resistance (adhesion to the surface of articles) may decrease. If the content of the titanium-containing ceramic resin is less than 20 mass%, peel resistance may decrease; if more than 30 mass%, the concealing properties may decrease. If the content of the auxiliary additive is less than 5 mass%, peel resistance of the marking part may decrease; if more than 15 mass%, the concealing properties may decrease as well as the decrease of the peel resistance of the marking part.

The marking composition of this embodiment has the property of changing color when irradiated with a laser beam. As preferable examples of such a laser beam, beams emitted from carbon dioxide (CO₂) laser, YAG laser, and YVO₄ laser can be given. As examples of the combination of the inorganic pigment and titanium-containing ceramic resin which can produce a marking composition liable to change color by being irradiated with a laser beam, a combination of titanium oxide and polytitanocarbosilane resin at a mass ratio of 34:24 can be given.

An embodiment of the information display method of the present invention will be specifically described below.

The information display method for displaying information on an article of the present invention is as set out in claim 4.

In this embodiment, the inorganic pigment, the titanium-containing ceramic resin, and the auxiliary additive mentioned above are used. Specifically, it is preferable to use a marking composition containing at least one inorganic pigment selected from the group consisting of titanium oxide, aluminum oxide, zirconium oxide, zinc oxide, white lead, and zinc sulfide, and at least one auxiliary additive selected from the group consisting of mica, talc, kaolin, and silica.

A laser beam emitted from a carbon dioxide (CO₂) laser is preferably used in this embodiment. A high definition marking with a high contrast can be obtained when these requirements are satisfied.

A carbon dioxide (CO₂) laser having an output intensity preferably of 0.005 to 0.06 W·s/mm, and more preferably of 0.03 to 0. 045 W·s/mm is used in this embodiment. If the output intensity is less than 0.005 W·s/mm, the resulting marking may have only a low contrast due to low irradiation energy; if more than 0.06 W·s/mm, the marking may have poor definition and low contrast due to excessive irradiation energy. The output intensity can be calculated by dividing the laser output (W) by the laser speed (mm/s).

This embodiment may be effectively applied to a ceramic honeycomb structural body to display information of product such as weight, diameter, height, inner surface area, and inner density.

### EXAMPLES

The present invention is described below in more detail by way of examples. Note that the present invention is not limited to the following examples.

### Example 1

A marking composition with a solid content of 70 mass% and a Ford cup No. 4 viscosity of 25 seconds was prepared by mixing 34 mass% of titanium oxide (TiO₂) with a particle diameter of 0.4 µm as an inorganic pigment, 24 mass% of a titanium-containing ceramic resin ("Tilanocoat" manufactured by Ube Industries, Ltd.), 12 mass% of mica (KMg₃(AlSiO₁₀)F₂) as an auxiliary additive, and an organic solvent as a dispersion medium by a bead mill method using glass beads with a diameter of 2 mm.

The marking composition obtained in Example 1 was applied on the surface of a cordierite honeycomb structural body (partition wall: 2 mil, cell density: 900 cpsi, outer shape: diameter of 106 mm, length: 114 mm) using a pad printing machine (manufactured by Info Sight Corp.) and dried by hot air to obtain a coated film, which was irradiated with a laser beam using a carbon dioxide (CO₂) laser equipment ("ML-G9300" manufactured by Keyence Corp., maximum output intensity: 30 W·s/mm) to blacken predetermined parts of the the coated film. Discrimination information indicating the actual average outside diameter of the honeycomb structural body by means of a barcode and numbers was thus displayed on the surface of the honeycomb structural body.

The barcode (discrimination information) was displayed by changing the output intensity of the carbon dioxide (CO₂) laser equipment in several levels. The cordierite honeycomb structural body on which the barcode was displayed was placed in a furnace and allowed to keep at 800°C for four hours, gradually cooled so as to prevent thermal shock cracking, and removed from the furnace. The discrimination information was then read using a barcode reader. The output intensity range (output range) of the carbon dioxide (CO₂) laser in which the product with a reading rate of 70% or more can be produced was regarded as the effective output intensity range. The product exhibiting a broader effective output intensity range was more resistant to disturbance at the time of production (at the time of information display production) and evaluated as good.

In order to determine the barcode reading rate for evaluating anti-translucency, the product on which the discrimination information was displayed was placed in a furnace and allowed to keep at 800°C for 30 minutes, gradually cooled so as to prevent thermal shock cracking, and removed from the furnace. For evaluation, the end portion of the product was immersed in a black ink diluted 50-fold ("Suminohana" manufactured by KAIMEI & Co., Ltd.) in a container such as a Petri dish. After drying, the discrimination information was read with the barcode reader. The higher the reading rate, the higher the anti-translucency (concealing properties). Such a product was evaluated to be a marking with excellent distinctiveness.

The measurement results are shown in Table 1.

### Examples 2 and 3

The same experiments as in Example 1 were carried out except for using titanium oxide (TiO₂) having particle diameters as shown in Table 1 as the inorganic pigment. The measurement results for the effective output intensity range (W·s/mm) of the carbon dioxide (CO₂) laser equipment and the barcode reading rate (%) to compare anti-translucency are shown in Table 1.

### Examples 4 and 5

The same experiments as in Example 1 were carried out except for using titanium oxide (TiO₂) in amounts shown in Table 1 as the inorganic pigment. The measurement results for the effective output intensity range (W·s/mm) of the carbon dioxide (CO₂) laser equipment and the barcode reading rate (%) to compare anti-translucency are shown in Table 1.

### Examples 6 and 7

The same experiments as in Example 1 were carried out except for using a titanium-containing ceramic resin in amounts shown in Table 1 as the inorganic pigments. The measurement results for the effective output intensity range (W·s/mm) of the carbon dioxide (CO₂) laser equipment and the barcode reading rate (%) to compare anti-translucency are shown in Table 1.

### Examples 8 to 10

The same experiments as in Example 1 were carried out except for using the auxiliary additive in amounts shown in Table 1. The measurement results for the effective output intensity range (W·s/mm) of the carbon dioxide (CO₂) laser equipment and the barcode reading rate (%) to compare anti-translucency are shown in Table 1.

### Example 11

The same experiments as in Example 1 were carried out except for changing the type and the amount of the auxiliary additive shown in Table 1. The measurement results for the effective output intensity range (W·s/mm) of the carbon dioxide (CO₂) laser equipment and the barcode reading rate (%) to compare anti-translucency are shown in Table 1.

### Example 12

The same experiments as in Example 1 were carried out except for changing the type and the amount of the auxiliary additive (total amount). The measurement results for the effective output intensity range (W·s/mm) of the carbon dioxide (CO₂) laser equipment and the barcode reading rate (%) to compare anti-translucency are shown in Table 1.

### Example 13

The same experiments as in Example 1 were carried out except for changing the type, the particle diameter, and the amount of the inorganic pigment and the amount of the titanium-containing ceramic resin, and the type and the amount of the auxiliary additive as shown in Table 1. The measurement results for the effective output intensity range (W·s/mm) of the carbon dioxide (CO₂) laser equipment and the barcode reading rate (%) to compare anti-translucency are shown in Table 1.

### Example 14

The same experiments as in Example 1 were carried out except for changing the type, the particle diameter, the amount of the inorganic pigment and the amount of titanium-containing ceramic resin, and the type and the amount of the auxiliary additive as shown in Table 1. The measurement results for the effective output intensity range (W·s/mm) of the carbon dioxide (CO₂) laser equipment and the barcode reading rate (%) to compare anti-translucency are shown in Table 1.

### Comparative Example 1

The same experiments as in Example 1 were carried out except for changing the type, the particle diameter, and the amount of the inorganic pigment as shown in Table 1, using a silicone resin instead of the titanium-containing ceramic resin in an amount shown in Table 1, and changing the type and the amount of the auxiliary additive as shown in Table 1. The measurement results for the effective output intensity range (W·sec/mm) of the carbon dioxide (CO₂) laser equipment and the barcode reading rate (%) to compare anti-translucency are shown in Table 1.

### Comparative Example 2

The same experiments as in Example 1 were carried out except for changing the type (aluminum oxide (Al₂O₃)), the particle diameter and the amount of the inorganic pigment as shown in Table 1. The measurement results for the effective output intensity range (W·s/mm) of the carbon dioxide (CO₂) laser equipment and the barcode reading rate (%) to compare anti-translucency are shown in Table 1.

### Comparative Example 3

The same experiments as in Example 1 were carried out except for changing the type, the particle diameter, and the amount of the inorganic pigment as shown in Table 1 and omitting the addition of the auxiliary additive. The measurement results for the effective output intensity range (W·s/mm) of the carbon dioxide (CO₂) laser equipment and the barcode reading rate (%) to compare anti-translucency are shown in Table 1.

**[TABLE 1]**

| | | Inorganic pigment | | | Titanium-containing ceramic resin | Auxiliary additive | | Evaluation | | |
|---|---|---|---|---|---|---|---|---|---|---|
| | | Type | Particle diameter (µm) | Amount (mass%) | Amount (mass%) | Type | Amount (mass%) | Output intensity of CO₂ laser | | Anti-trantucency barcode reading rate (%) |
| | | | | | | | | Output range | W·s /mm | |
| | 1 | TiO₂ | 0.4 | 34 | 24 | Mica | 12 | 0.04 | 0.005 to 0.045 | 97 |
| | 2 | TiO₂ | 0.1 | 34 | 24 | Mica | 12 | 0.025 | 0.005 to 0.03 | 91 |
| | 3 | TiO₂ | 5 | 34 | 24 | Mica | 12 | 0.04 | 0.01 to 0.05 | 85 |
| | 4 | TiO₂ | 0.4 | 30 | 24 | Mica | 12 | 0.04 | 0.005 to 0.045 | 92 |
| | 5 | TiO₂ | 0.4 | 40 | 24 | Mica | 12 | 0.04 | 0.005 to 0.045 | 98 |
| | 6 | TiO₂ | 0.4 | 34 | 20 | Mica | 12 | 0.04 | 0.005 to 0.045 | 92 |
| Example | 7 | TiO₂ | 0.4 | 34 | 30 | Mica | 12 | 0.04 | 0.005 to 0.045 | 93 |
| | 8 | TiO₂ | 0.4 | 34 | 24 | - | 0 | 0.03 | 0.01 to 0.04 | 75 |
| | 9 | TiO₂ | 0.4 | 34 | 24 | Mica | 5 | 0.035 | 0.005 to 0.04 | 83 |
| | 10 | TiO₂ | 0.4 | 34 | 24 | Mica | 15 | 0.04 | 0.005 to 0.045 | 85 |
| | 11 | TiO₂ | 0.4 | 34 | 24 | Talc | 15 | 0.04 | 0.005 to 0.045 | 90 |
| | 12 | TiO₂ | 0.4 | 34 | 24 | Kaolin + Silica | 15 | 0.035 | 0.01 to 0.045 | 92 |
| | 13 | Al₂O₃ | 1 | 30 | 23 | Talc | 15 | 0.03 | 0.03 to 0.06 | 95 |
| | 14 | ZrO₂ | 1 | 30 | 23 | Kaolin | 15 | 0.03 | 0.03 to 0.06 | 95 |
| Comparative Example | 1 | TiO₂-coated mica | 10 | 15 to 25 | (Silicone resin) 20 to 30 | Talc | 5 to 15 | 0.01 | 0.02 to 0.03 | 35 |
| | 2 | Al₂O₃ | 10 | 34 | 24 | Mica | 12 | 0.01 | 0.05 to 0.06 | 44 |
| | 3 | TiO₂-coated mica | 10 | 34 | 24 | - | - | 0.01 | 0.02 to 0.03 | 40 |

### Discussion

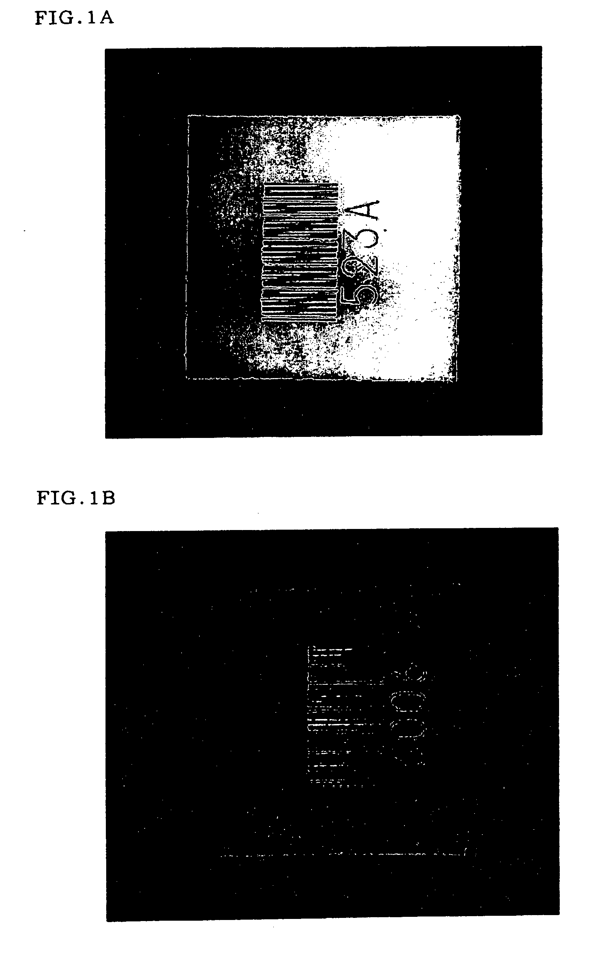

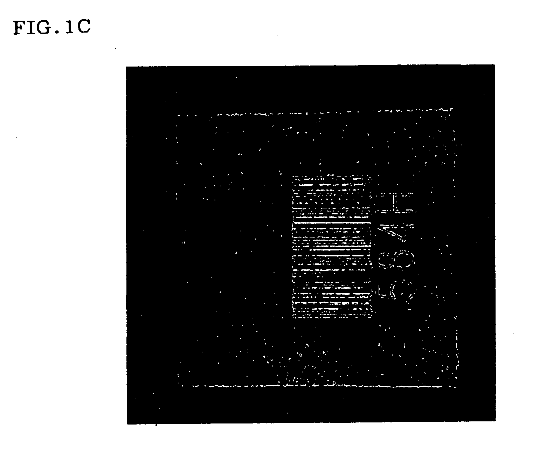

Figs. 1A to 1C are photographs comparing the anti-translucency of the marking obtained in Example 1 with the markings obtained in Comparative Example 1 and Comparative Example 3. As can be seen from Figs. 1A to 1C and Table 1, the marking compositions obtained in the examples can expand the range capable of producing a heat-resistant laser marking, can maintain color tone (white color) of the coated film areas due to high concealing properties, and ensures stable reading of the discrimination information by means of high definition and high contrast. In particular, as is clear from the results of Example 1 and Comparative Examples 2 and 3, when the average particle diameter of the inorganic pigment is within the traditional-art range (i.e., outside the range of the marking composition of the present invention), the barcode reading rate (%) cannot be improved even if the composition contains a titanium-containing ceramic resin, or mica or talc as an auxiliary additive.

### INDUSTRIAL APPLICABILITY

The marking composition and the information display method of the present invention can be effectively used in various industrial fields (e.g., ceramic product manufacturing industry, metal manufacturing industry, resin manufacturing industry, and rubber product manufacturing industry) in which information must be displayed by forming a marking on an article (particularly on the surface of the article).

## Claims

1. A marking composition for forming a marking on the surface of an article, comprising an inorganic pigment having an average particle diameter of 0.1 to 5 µm, a titanium-containing ceramic resin and at least one auxiliary additive selected from the group consisting of mica, talc, kaolin, and silica, wherein the marking composition has a property capable of changing color when irradiated with a laser beam.

2. The marking composition according to claim 1, wherein the inorganic pigment is at least one inorganic pigment selected from the group consisting of titanium oxide, aluminum oxide, zirconium oxide, zinc oxide, white lead, and zinc sulfide.

3. The marking composition according to claim 1 or claim 2, wherein the marking composition contains the inorganic pigment in an amount of 30 to 40 mass%, the titanium-containing ceramic resin in an amount of 20 to 30 mass%, and the auxiliary additive in an amount of 5 to 15 mass%.

4. An information display method for displaying information on an article, the method comprising applying a marking composition which comprises an inorganic pigment having an average particle diameter of 0.1 to 5 µm, a titanium-containing ceramic resin and at least one auxiliary additive selected from the group consisting of mica, talc, kaolin, and silica to the surface of the article to form a coated film, and irradiating a predetermined part of the coated film with a laser beam to blacken and display the predetermined part as discrimination information with respect to the remaining part.

5. The information display method according to claim 4, wherein a marking composition, of which inorganic pigment is at least one inorganic pigment selected from the group consisting of titanium oxide, aluminum oxide, zirconium oxide, zinc oxide, white lead, and zinc sulfide, is used as a marking composition.

6. The information display method according to any one of claims 4 to 5, wherein a laser beam which is emitted from a carbon dioxide (CO₂) laser is used as a leaser beam.

7. The information display method according to any one of claims 4 to 6, wherein a carbon dioxide (CO₂) laser having an output intensity of 0.005 to 0.06 W·s/mm is used as a carbon dioxide (CO₂) laser.

8. The information display method according to claims 4 to 7, wherein the information is displayed on a ceramic honeycomb structural body as the article.

## Patentansprüche

1. Kennzeichnungszusammensetzung zur Ausbildung einer Kennzeichnung auf der Oberfläche eines Gegenstands, die ein anorganisches Pigment mit einem mittleren Teilchendurchmesser von 0,1 bis 5 µm, ein titanhältiges Keramikharz und zumindest einen Hilfszusatzstoff, der aus der aus Glimmer, Talk, Kaolin und Silica bestehenden Gruppe ausgewählt ist, umfasst, wobei die Kennzeichnungszusammenset-zung die Eigenschaft aufweist, dass sie zur Änderung der Farbe in der Lage ist, wenn sie mit einem Laserstrahl bestrahlt wird.

2. Kennzeichnungszusammensetzung nach Anspruch 1, wobei das anorganische Pigment zumindest ein anorganisches Pigment ist, das aus der aus Titandioxid, Aluminiumoxid, Zirconiumdioxid, Zinkoxid, Bleiweiß und Zinksulfid bestehenden Gruppe ausgewählt ist.

3. Kennzeichnungszusammensetzung nach Anspruch 1 oder Anspruch 2, wobei die Kennzeichnungszusammensetzung das anorganische Pigment in einer Menge von 30 bis 40 Masse-%, das titanhältige Keramikharz in einer Menge von 20 bis 30 Masse-% und den Hilfszusatzstoff in einer Menge von 5 bis 15 Masse-% umfasst.

4. Informationsanzeigeverfahren zur Anzeige von Informationen auf einem Gegenstand, wobei das Verfahren das Aufbringen einer Kennzeichnungszusammensetzung, die ein anorganisches Pigment mit einem mittleren Teilchendurchmesser von 0,1 bis 5 µm, ein titanhältiges Keramikharz und zumindest einen Hilfszusatzstoff, der aus der aus Glimmer, Talk, Kaolin und Silica bestehenden Gruppe ausgewählt ist, umfasst, auf die Oberfläche des Gegenstands, um einen Beschichtungsfilm zu bilden, und das Bestrahlen eines vorbestimmten Teils des Beschichtungsfilms mit einem Laserstrahl, um den vorbestimmten Teil als Unterscheidungsinformation in Bezug auf den restlichen Teil zu schwärzen und anzuzeigen, umfasst.

5. Informationsanzeigeverfahren nach Anspruch 4, wobei eine Kennzeichnungszusammensetzung, deren anorganisches Pigment zumindest ein anorganisches Pigment ist, das aus der aus Titandioxid, Aluminiumoxid, Zirconiumdioxid, Zinkoxid, Bleiweiß und Zinksulfid bestehenden Gruppe ausgewählt ist, als Kennzeichnungszusammensetzung eingesetzt wird.

6. Informationsanzeigeverfahren nach einem der Ansprüche 4 bis 5, wobei ein Laserstrahl, der von einem Kohlendioxid- (CO₂-) Laser ausgestrahlt wird, als Laserstrahl verwendet wird.

7. Informationsanzeigeverfahren nach einem der Ansprüche 4 bis 6, wobei ein Kohlendioxid- (CO₂-) Laser mit einer Ausgangsintensität von 0,005 bis 0,06 W·s/mm als Kohlendioxid- (CO₂-) Laser verwendet wird.

8. Informationsanzeigeverfahren nach einem der Ansprüche 4 bis 7, wobei die Information auf einem Keramikwabenstrukturkörper als Gegenstand angezeigt wird.

## Revendications

1. Composition de marquage destinée à former un marquage sur la surface d'un article, qui comprend un pigment inorganique ayant un diamètre moyen de particules de 0,1 à 5 µm, une résine de céramique contenant du titane, et au moins un additif auxiliaire choisi parmi le groupe qui consiste en du mica, du talc, du kaolin, et de la silice, ladite composition de marquage étant capable de changer de couleur lorsqu'elle est irradiée avec un faisceau laser.

2. Composition de marquage selon la revendication 1, dans laquelle ledit pigment inorganique est au moins un pigment inorganique choisi parmi le groupe qui consiste en de l'oxyde de titane, de l'oxyde d'aluminium, de l'oxyde de zirconium, de l'oxyde de zinc, du plomb blanc, et du sulfure de zinc.

3. Composition de marquage selon la revendication 1 ou 2, qui contient ledit pigment inorganique selon une quantité de 30 à 40% en poids, ladite résine de céramique contenant du titane selon une quantité de 20 à 30% en poids, et ledit additif auxiliaire selon une quantité de 5 à 15% en poids.

4. Procédé d'affichage d'informations destiné à afficher des informations sur un article, ledit procédé comprenant l'application d'une composition de marquage qui comprend un pigment inorganique ayant un diamètre moyen de particules de 0,1 à 5 µm, une résine de céramique contenant du titane, et au moins un additif auxiliaire choisi parmi le groupe qui consiste en du mica, du talc, du kaolin, et de la silice sur la surface dudit article afin de former un film de revêtement, et l'irradiation d'une partie prédéterminée dudit film de revêtement avec un faisceau laser afin de noircir et d'afficher ladite partie prédéterminée en guise d'informations de discrimination par rapport à la partie restante.

5. Procédé d'affichage d'informations selon la revendication 4, dans lequel une composition de marquage, dont le pigment inorganique est au moins l'un d'un pigment inorganique choisi parmi le groupe qui consiste en de l'oxyde de titane, de l'oxyde d'aluminium, de l'oxyde de zirconium, de l'oxyde de zinc, du plomb blanc, et du sulfure de zinc, est utilisée comme composition de marquage.

6. Procédé d'affichage d'informations selon l'une quelconque des revendications 4 à 5, dans lequel un faisceau laser qui est émis par un laser au dioxyde de carbone (CO₂) est utilisé comme faisceau laser.

7. Procédé d'affichage d'informations selon l'une quelconque des revendications 4 à 6, dans lequel un laser au dioxyde de carbone (CO₂) ayant une intensité de sortie de 0,005 à 0,06 W*s/mm est utilisé comme laser au dioxyde de carbone (CO₂).

8. Procédé d'affichage d'informations selon les revendications 4 à 7, dans lequel les informations sont affichées sur un corps structurel en céramique en forme de nids d'abeille qui fait office d'article.
